(19) Europäisches Patentamt
European Patent Office
Office européen des brevets

(11) **EP 2 090 367 A1**

(12) **EUROPÄISCHE PATENTANMELDUNG**

(43) Veröffentlichungstag:
**19.08.2009 Patentblatt 2009/34**

(51) Int Cl.:
***B03C 1/015*** *(2006.01)* ***B03C 1/28*** *(2006.01)*

(21) Anmeldenummer: **08002788.1**

(22) Anmeldetag: **15.02.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(71) Anmelder: **SIEMENS AKTIENGESELLSCHAFT 80333 München (DE)**

(72) Erfinder: **Die Erfindernennung liegt noch nicht vor**

(54) **Verfahren und Vorrichtung zur kontinuierlichen Gewinnung von nichtmagnetischen Erzen**

(57)     Die Erfindung betrifft eine Vorrichtung und ein Verfahren zur kontinuierlichen Gewinnung von nichtmagnetischen Erzen aus einer nichtmagnetische Erzpartikel aufweisenden Pulpe (P) mit einem Feststoffanteil von wenigstens 40 Vol%,

- wobei die Pulpe (P) einen Reaktor (1) in Strömungsrichtung kontinuierlich durchströmt (100),
- wobei der Pulpe (P) magnetische oder magnetisierbare Magnetpartikel zugeführt (103) werden, welche mit den nichtmagnetischen Erzpartikeln Erz-Magnetpartikel-Agglomerate bilden,

- wobei die Erz-Magnetpartikel-Agglomerate mittels eines Magnetfelds in einen Akkumulationsbereich (4) des Reaktors (1) bewegt (106) werden, und
- wobei die Erz-Magnetpartikel-Agglomerate aus dem Akkumulationsbereich (4) des Reaktors (1) abgeführt (108, 109) werden. Durch eine derartiges Verfahren und eine derartige Vorrichtung zur Durchführung des Verfahrens kann ein Verfahren und eine Vorrichtung bereitgestellt werden, mit welcher die Ausbeute bei der Gewinnung von Erzen gesteigert werden kann.

FIG 1

EP 2 090 367 A1

**Beschreibung**

Die Erfindung betrifft ein Verfahren und eine Vorrichtung zur Gewinnung von nichtmagnetischen Erzen aus einer nichtmagnetische Erzpartikel aufweisenden Pulpe mit einem Feststoffanteil von wenigstens 40 Vol%.

Zur Gewinnung von Erzen aus im Bergbau abgebauten erzhaltigem Schüttgut werden heute häufig Flotationszellen eingesetzt. Einer Flotationszelle wird eine erzhaltige Pulpe, d.h. eine Suspension aus Wasser, gemahlenem Gestein und gemahlenem Erz, zugeführt. Alle nichtlöslichen Feststoffe in der Pulpe bilden den Feststoffanteil der Pulpe, welcher in der Regel bei mindestens 40 Vol% liegt.

Durch die Zugabe von entsprechenden Chemikalien werden die Erzpartikel in der Suspension hydrophobisiert. In die Flotationszelle wird ein Gas, in der Regel Luft, eingeblasen. Es kommt zur Ausbildung von Bläschen in der Pulpe. Die hydrophobisierten Erzpartikel haften an den Bläschen an und werden an die Oberfläche transportiert. Dort bildet sich ein Schaum aus, welcher einen hohen Erzgehalt aufweist. Dieser Schaum wird über Schaumablaufrinnen aus der Pulpe entfernt und weiterverarbeitet.

Nachteil dieser Lösung ist es, dass die entstehenden Bläschen schwer zu kontrollieren sind. Ferner ist die Dauer, bis der erzreiche Schaum aus dem Pulpenreservoir in die Schaumablaufrinne gelangt, aufgrund der hohen Viskosität der Pulpe relativ hoch. Dies führt dazu, dass an den Bläschen anhaftende Erzpartikel durch Wechselwirkungen von Luftbläschen untereinander wieder verloren gehen können. Dadurch wird die Ausbeute der Flotationszelle verringert.

Aufgabe der Erfindung ist es, ein Verfahren und eine Vorrichtung anzugeben, mit welcher die Ausbeute bei der Gewinnung von Erzen gesteigert werden kann.

Der dem verfahren zugeordnete Teil der Aufgabe wird gelöst durch ein Verfahren zur kontinuierlichen Gewinnung von nichtmagnetischen Erzen aus einer nichtmagnetische Erzpartikel aufweisenden Pulpe mit einem Feststoffanteil von wenigstens 40 vol%, wobei die Pulpe einen Reaktor in Strömungsrichtung kontinuierlich durchströmt, wobei der Pulpe magnetische oder magnetisierbare Magnetpartikel zugeführt werden, welche mit den nichtmagnetischen Erzpartikeln Erz-Magnetpartikel-Agglomerate bilden, wobei die Erz-Magnetpartikel-Agglomerate mittels eines Magnetfelds in einen Akkumulationsbereich des Reaktors bewegt werden, und wobei die Erz-Magnetpartikel-Agglomerate aus dem Akkumulationsbereich des Reaktors abgeführt werden.

Die Magnetpartikel können der Pulpe bereits vor Eintritt der Pulpe in den Reaktor zugeführt sein. Als Magnetpartikel kann bspw. Magnetit verwendet werden. Es können jedoch auch beliebige andere, magnetische oder magnetisierbare Magnetpartikel bzw. Medien/Stoffe zum Einsatz kommen. Die in die Pulpe zugeführten Magnetpartikel weisen eine Oberfläche auf, an welche sich selektiv nichtmagnetische Erzpartikel anlagern können. Die Bereitstellung einer solchen Oberfläche kann durch eine Vorbehandlung der Magnetpartikel erfolgen. Magnetpartikel und daran gebundene Erzpartikel werden im Rahmen dieser Anmeldung als Erz-Magnetpartikel-Agglomerat bezeichnet. Indem sich Erz-Magnetpartikel-Agglomerate bilden, kann das nichtmagnetische Erz mittels eines Magnetfelds gezielt in der Pulpe an einen vorbestimmten Ort bzw. in einen vorbestimmten Bereich bewegt werden, da auf die die Erzpartikel tragenden Magnetpartikel eine Kraft wirkt. Das Magnetfeld ist dabei derart ausgebildet, dass sich die Erz-Magnetpartikel-Agglomerate in einen vorbestimmten Akkumulationsbereich sammeln. Beim Akkumulationsbereich handelt es sich um wenigstens ein bestimmtes Volumenelement des Reaktors, in das gezielt mittels eines Magnetfelds Erz-Magnetpartikel-Agglomerate hinein- bzw. hindurchbewegt werden. Aus dem Akkumulationsbereich und damit aus der Pulpe werden dann die Erz-Magnetpartikel-Agglomerate entfernt. Unter Reaktor wird ein Vorrichtungsabschnitt oder die Summe derjenigen Vorrichtungsabschnitte verstanden, in welchem eine Akkumulation von Erz-Magnetpartikel-Agglomeraten mit Hilfe wenigstens eines Magnetfelds stattfindet.

Das Verfahren findet kontinuierlich statt, wodurch eine kontinuierliche Gewinnung von Erz gegeben ist.

Das erfindungsgemäße Verfahren weist den großen Vorteil gegenüber den eingangs beschriebenen Flotationszellen auf, dass die Bewegung der Erz-Magnetpartikel-Agglomerate im Gegensatz zu den Bläschenbewegungen mit daran anhaftendem Erz in hohem Maße kontrollierbar ist. Dadurch kann eine erhöhte Ausbeute von Erzpartikeln verglichen mit einer Blasenflotation ermöglicht werden.

In einer vorteilhaften Ausgestaltung der Erfindung werden die Erz-Magnetpartikel-Agglomerate mittels einer Mehrzahl an in Strömungsrichtung nacheinander folgenden Magnetfeldern in voneinander getrennte Akkumulationsbereiche des Reaktors bewegt. Dadurch kann die Ausbeute weiter gesteigert werden. Aufgrund der hohen Viskosität der Pulpe gelangen in der Regel nicht alle Erz-Magnetpartikel-Agglomerate in den in Strömungsrichtung ersten Akkumulationsbereich. Durch die Verwendung einer Mehrzahl an in Strömungsrichtung nacheinander folgenden Extraktionsbereichen bzw. Separationsbereichen, d.h. Bereiche, in welchen eine durch ein Magnetfeld verursachte Kraft Erz-Magnetpartikel-Agglomerate in Richtung eines vorbestimmten Akkumulationsbereichs bewegt, wird die Extraktionsrate für Erz-Magnetpartikel-Agglomerate aus der Pulpe weiter erhöht.

In einer vorteilhaften Ausführungsform der Erfindung werden die Magnetpartikel und/oder die Erzpartikel hydrophobisiert. Die zu einer Hydrophobisierung von Stoffen verwendbaren Chemikalien sind dem Fachmann bekannt. Durch die Hydrophobisierung von Magnetpartikeln und/oder Erzpartikeln kann erreicht werden, dass Magnetpartikel und Erzpartikel aneinander binden. Diese Bindung ist in dieser Ausführungsform Grundlage für ein Erz-Magnetpartikel-Agglomerat. Jedoch können auch andere Bindungsmechanismen verwendet werden, welche ein Erz-Magnetpartikel-Agglomerat aus den in der Pulpe vorliegenden Erzpartikeln und Magnetpartikeln erzeugen.

In einer weiteren vorteilhaften Ausgestaltung der Erfindung durchströmt die Pulpe den Reaktor turbulent. Eine turbulente Strömung kann bspw. über die Fließgeschwindigkeit oder über eine entsprechende Ausbildung des Reaktors eingestellt werden. Eine turbulente Strömung der Pulpe hat im Gegensatz zu einer laminare Strömung den vorteil, dass magnetfeldfreie Räume im Extraktions- bzw. Separationsbereich, welche bspw. aufgrund der Magnetanordnung entstehen, kaum von Bedeutung sind. Die turbulente Strömung erlaubt es beispielsweise, Magnetfeldanordnungen zu wählen, bei denen die Kraft auf ein Erz-Magnetpartikel-Agglomerat im Mittel maximal ist, jedoch auch - etwa durch eine Magnetanordnung bedingt - kraftfeldfreie Räume existieren dürfen.

In einer weiteren vorteilhaften Ausgestaltung der Erfindung werden die Erz-Magnetpartikel-Agglomerate kontinuierlich mittels eines Magnetfeldes und/oder strömungstechnischer Maßnahmen in einen Sammelbereich abgeführt. Dadurch wird ein gleichmäßiger Betrieb erreicht. Eine derartige Vorgehensweise ist dann zweckmäßig, wenn im Akkumulationsbereich ständig eine hohe Dichte an Erz-Magnetpartikel-Agglomeraten herrscht.

Es kann für jeden Akkumulationsbereich ein eigener Sammelbereich vorgesehen sein. Vorzugsweise sind mehrere Akkumulationsbereiche einem Sammelbereich zugeordnet.

In einer alternativen Ausgestaltung der Erfindung werden die Erz-Magnetpartikel-Agglomerate mittels eines Magnetfeldes und/oder strömungstechnischer Maßnahmen diskontinuierlich, insbesondere bei Überschreiten einer Mindestmenge der akkumulierten Erz-Magnetpartikel-Agglomerate im Akkumulationsbereich, in einen Sammelbereich abgeführt. Durch eine diskontinuierliche Abführung.ist eine kontinuierliche Gewinnung von Erzen möglich, jedoch werden einem Sammelbereich jeweils stoßweise die in einem bestimmten Akkumulationsbereich akkumulierten Erz-Magnetpartikel-Agglomerate zugeführt. Vorzugsweise wird dann eine Abführung aus dem jeweiligen Akkumulationsbereich durchgeführt, sobald eine festlegbare Mindestmenge an Erz-Magnetpartikel-Agglomeraten in dem jeweiligen Akkumulationsbereich vorliegt. Für verschiedene Akkumulationsbereiche, insbesondere in Strömungsrichtung nacheinander folgende Akkumulationsbereiche, können verschiedene Mindestmengen als Schwellwert zur Einleitung einer Abführung aus dem jew. Akkumulationsbereich vorgesehen werden. Es kann für jeden Akkumulationsbereich ein eigener Sammelbereich vorgesehen sein. Vorzugsweise sind mehrere Akkumulationsbereiche einem Sammelbereich zugeordnet.

In einer vorteilhaften Ausführungsform der Erfindung werden Erz-Magnetpartikel-Agglomerate durch chemische, mechanische, akustische und/oder thermische Verfahren in Erzpartikel und Magnetpartikel getrennt. Dies erleichtert einerseits die nachfolgende Verarbeitung des Erzes, da die bisher verwendbaren Vorrichtungen zur Weiterverarbeitung im wesentlichen unverändert beibehalten werden können. Andererseits erlaubt eine frühzeitige Trennung der Erz-Magnetpartikel-Agglomerate eine Wiederverwertung der Magnetpartikel für das verfahren. Der Trennungsmechanismus für die Erz-Magnetpartikel-Agglomerate ist in der Regel abhängig von dem gewählten Bindungsmechanismus für die Erz-Magnetpartikel-Agglomerate.

In einer bevorzugten Ausführungsvariante der Erfindung erfolgt die Trennung von Magnetpartikeln und Erzpartikeln mittels Ultraschall. Ultraschall eignet sich besonders zur Trennung von Erz-Magnetpartikel-Agglomeraten in Erzpartikel und Magnetpartikel, da mittels diesem unabhängig vom gewählten Bindungsmechanismus zwischen Erzpartikel und Magnetpartikel eine Bindung aufgebrochen werden kann. Die Verwendung von Ultraschall zur Trennung ist ferner technisch besonders einfach.

In einer besonders vorteilhaften Ausgestaltung der Erfindung werden der Pulpe die von Erz-Magnetpartikel-Agglomeraten abgetrennten Magnetpartikel erneut zugeführt. Die Magnetpartikel werden dabei der Pulpe derart zugeführt, dass die Pulpe nach der zuführung in ein die Erz-Magnetpartikel in einen Akkumulationsbereich bewegendes Magnetfeld gelangen kann, Dadurch können die Kosten für den Einkauf der Magnetpartikel, welche für die Durchführung des erfindungsgemäßen Verfahrens erforderlich sind, drastisch reduziert werden. Eine möglichst' hohe Recyclingrate bzw. Wiederverwertungsrate für die Magnetpartikel ist daher anzustreben.

Insbesondere ist es vorteilhaft, wenn Magnetpartikel vor Ort hergestellt werden. Dadurch kann flexibel auf den Bedarf an neuen Magnetpartikeln und die wirtschaftliche Auslastung des Betriebs reagiert werden. Da in der Regel nicht alle der Pulpe zugeführten Magnetpartikel bei der Trennung der Erz-Magnetpartikel-Agglomerate funktionstüchtig zurückerhalten werden, muss in der Regel stets ein Anteil neuer Magnetpartikel für das erfindungsgemäße Verfahren verwendet werden.

In einer vorteilhaften Ausführungsform der Erfindung durchströmt die Pulpe eine Mehrzahl an voneinander getrennten, im strömungstechnischen Sinne parallel geschalteten Strömungskanälen, wobei die Strömungskanäle jeweils mit einem Magnetfeld beaufschlagt werden, welches Erz-Magnetpartikel-Agglomerate im jeweiligen Strömungskanal in wenigstens einen Akkumulationsbereich bewegt. Durch eine derartige Vorgehensweise ist es möglich, den Durchsatz einer Anlage unter Nutzung eines gleichbleibenden Konzepts beliebig zu erhöhen. Um den Durchsatz für das vorliegende Verfahren zu steigern, ist es lediglich erforderlich, den eingangsseitigen Pulpen-Volumenstrom zu erhöhen, sowie eine Anzahl weiter Strömungskanäle vorzusehen, durch welche die Pulpe strömt und in welchen eine Akkumulation in dafür vorgesehenen Akkumulationsbereichen stattfinden kann, aus welchen Erz-Magnetpartikel-Agglomerate abgeführt werden können.

In einer vorteilhaften Ausgestaltung der Erfindung wird eine Zustandsgröße der Pulpe erfasst und die Zuführung von Magnetpartikeln und/oder ggf. weiteren Zusatzstoffen, insbesondere Mittel zur Hydrophobisierung von Magnetpartikeln und/oder Erzpartikeln, auf Grundlage der erfassten Zustandsgröße gesteuert und/oder geregelt. Als Zustandsgröße kann insbesondere eine Größe verwendet werden, welche signifikanten Einfluss auf die Erzgewinnung nimmt. Bspw. kann als Zustandsgröße ein Erzanteil in der Pulpe bzw. Erzanteile unterschiedlicher Erze in der Pulpe, ein Größenverteilung von Erzpartikeln, ein Sättigungsmaß für die Bildung von Erz-Magnetpartikel-Agglomeraten, ein Maß für die Hydrophobisierung der in der Pulpe vorliegenden Erzartikel und/oder Magnetpartikel hergenommen werden. Indem die Zugabe von Magnetpartikeln und/oder weiteren Zusatzstoffen präzise in den erforderlichen Mengen gesteuert und/oder geregelt wird, kann besonders sparsam mit Ressourcen, wie etwa Magnetpartikeln und ggf. weiteren Zusatzstoffen, wie etwa Chemikalien zur Hydrophobisierung von Erzpartikeln und/oder Magnetpartikeln, umgegangen werden. Dadurch werden Kosten für die Durchführung des Verfahrens sowie die Umweltbelastungen möglichst gering gehalten. Ferner kann aber auch genau diejenige Menge an Magnetpartikeln und/oder Zusatzstoffen in die Pulpe gegeben werden, welche einen möglichst hohen Anteil der Erzpartikel in der Pulpe als Erz-Magnetpartikel-Agglomerate einstellt. Dies ist von Bedeutung, da die Menge an in der Pulpe vorliegenden Erz-Magnetpartikel-Agglomeraten wesentlichen Einfluss auf die Erzausbeute aus der Pulpe nimmt.

In einer vorteilhaften Ausgestaltung der Erfindung werden der Pulpe Magnetpartikel vor Eintritt der Pulpe in den Reaktor, insbesondere bei oder vor einem Mahlvorgang zum Mahlen von Erz, zugeführt. Zwar liegt im Reaktor vorzugsweise eine turbulente Strömung vor, welche dafür sorgt, dass sich Erzpartikel und Magnetpartikel aneinander binden und dadurch Erz-Magnetpartikel-Agglomerate bilden. Jedoch ist es vorteilhaft, eine möglichst hohe Mischungsenergie in die Pulpe einzubringen, um Erzpartikel und Magnetpartikel miteinander in Kontakt zu bringen, so dass diese eine Bindung eingehen können. Dies geschieht vorzugsweise bevor die Pulpe in den Reaktor eingeführt wird, da hier eine besonders intensive und energiereiche Durchmischung stattfinden kann.

Insbesondere ist es vorteilhaft den Mischvorgang von Erzpartikeln und Magnetpartikeln mit dem Mahlvorgang des Erzes zur Herstellung von Erzpartikeln zu kombinieren. Dadurch wird ein kombinatorischer Effekt wirksam. Einerseits mahlt die Mühle das Erz auf eine gewünschte Partikelgröße, andererseits bringt die Mühle gleichzeitig eine hohe Mischenergie in die Pulpe ein. Durch die energiereiche Mischung von Magnetpartikeln und Erzpartikeln kommt es so zu einer verbesserten Erz-Magnetpartikel-Agglomerat-Bildung, was im Reaktor zu einer Erhöhung der Erz-Ausbeute führt. Gegebenenfalls kann eine zusätzliche Mischung, neben der ggf. vorhandenen turbulenten Strömung, vor oder bei Eintritt in den Reaktor durchgeführt werden.

Der die Vorrichtung betreffende Teil der Aufgabe wird gelöst durch eine Vorrichtung zur kontinuierlichen Gewinnung von nichtmagnetischen Erzen aus einer nichtmagnetische Erzpartikel aufweisenden Pulpe mit einem Feststoffanteil von wenigstens 40 Vol%, mit einem zur Aufnahme von Pulpe dienenden Reaktor, wobei der Pulpe mit Erzpartikeln Erz-Magnetpartikel-Agglomerate bildende Magnetpartikel zugeführt sind, mit Mitteln zur Erzeugung eines Magnetfeldes, welches derart ausgestaltet ist, dass Erz-Magnetpartikel-Agglomerate in wenigstens einen Akkumulationsbereich des Reaktors bewegt werden, und mit einer Einrichtung zur Abführung der Erz-Magnetpartikel-Agglomerate aus dem wenigstens einen Akkumulationsbereich in wenigstens einen Sammelbereich. Mit einer derartigen Vorrichtung ist es möglich, kontrolliert eine hohe Ausbeute für Erzpartikel zu erreichen.

Die der Pulpe zugeführten Magnetpartikel können in der Vorrichtung selbst zugeführt werden oder bereits in einem vorgeordneten Prozess, etwa beim Mahlen des Erzes, in die Pulpe eingebracht werden. Soll eine Zuführung von Magnetpartikeln in die Pulpe in der Vorrichtung erfolgen, so weist die Vorrichtung vorzugsweise eine Zuführeinrichtung zur Zuführung von Magnetpartikeln in die Pulpe auf. Dies weist den Vorteil auf, dass die Menge an zuzugebenden Magnetpartikeln - um etwa einen möglichst hohen Anteil der Erzpartikel in der Pulpe als Erz-Magnetpartikel-Agglomerate zu erhalten - sehr gut einstellbar ist.

Wesentlich für die Funktion der erfindungsgemäßen Vorrichtung ist es, dass bei Eintritt der Pulpe in ein zur Separation von Erz-Magnetpartikel-Agglomeraten aus der Pulpe vorgesehenes Magnetfeld, welches durch entsprechende Mittel erzeugt wird, Erz-Magnetpartikel-Agglomerate in der Pulpe vorliegen, welche mittels des Magnetfelds in einen Akkumulationsbereich bewegt werden können. Aus dem Akkumulationsbereich werden diese dann mittels einer Abführeinrichtung in einen Sammelbereich abgeführt.

In einer vorteilhaften Ausgestaltung der Erfindung ist der Reaktor derart ausgebildet, dass dieser von einem festlegbaren Pulpen-Volumenstrom, vorzugsweise mindestens 7000 Kubikmeter pro Stunde, insbesondere 10000 Kubikmeter pro Stunde bis 15000 Kubikmeter pro Stunde, durchströmbar ist. Dadurch kann eine derartige Vorrichtung mit hohem Durchsatz und gleichzeitig relativ hoher Ausbeute betrieben werden. Dies stellt einen wesentlichen wirtschaftlichen Faktor für den Betrieb einer derartigen Vorrichtung dar.

In einer vorteilhaften Ausgestaltung der Erfindung ist der Reaktor mit dem wenigstens einen Sammelbereich fluidisch verbunden. Dadurch ist die Abführung aus dem Akkumulationsbereich besonders einfach zu bewerkstelligen, da der hydrostatische Druck die Abführung der im Akkumulationsbereich akkumulierten Erz-Magnetpartikel-Agglomerate unterstützt. Eine fluidische Verbindung des Sammelbereichs mit dem Akkumulationsbereich des Reaktors ist insbesondere von Vorteil bei einer kontinuierlichen Abführung von Erz-Magnetpartikel-Agglomeraten aus dem Akkumulationsbereich.

Vorteilhaft ist ebenfalls, wenn wenigstens eine Trennungseinrichtung mit Ultraschallsendern zur Abgabe von Ultraschall vorgesehen ist, deren abgebbare Leistung derart einstellbar ist, dass Erz-Magnetpartikel-Agglomerate in Magnetpartikel und Erzpartikel trennbar sind. Dadurch kann auf besonders einfach Weise eine Trennung der Erz-Magnetpartikel-Agglomerate in Erzpartikel und Magnetpartikel effizient unterstützt werden bzw. erfolgen. Durch die Trennung der Erz-Magnetpartikel-Agglomerate in einem der nächsten Prozessschritte nach Abführung aus dem Akkumulationsbereich ist es möglich, die zurück gewonnenen Magnetpartikeln erneut der Pulpe zuzuführen. Es erfolgt somit zumindest teilweise ein Recycling der Magnetpartikel. Ferner bedarf es keinerlei Prozessänderungen für die nachfolgenden Prozesse der Erzweiterverarbeitung, da die Erzpartikel wie bisher als Erzpartikel und nicht in Form von Erz-Magnetpartikel-Agglomeraten weiterverarbeitet werden können.

In einer besonders vorteilhaften Ausführungsvariante der Erfindung umfasst der Reaktor eine Mehrzahl an voneinander getrennten, im strömungstechnischen Sinne parallel geschalteten Strömungskanälen. Die Mehrzahl an Strömungskanälen erlaubt es, das grundlegende Prinzip zur Akkumulation des Erzes für einen beliebig hohen Durchsatz zu verwenden. Insbesondere, wenn für im Wesentlichen alle Strömungskanäle stets baulich gleiche Rohre und Mittel zur Erzeugung von Magnetfeldern verwendet werden, kann der Reaktor in hohem Maße standardisiert werden. D.h. es sind immer wieder die gleichen Bauteile für die Strömungskanäle und deren Betrieb erforderlich. Dies führt zu einer Kostenverringerung für die Vorrichtung. Ferner sind Ersatzteile für Wartungsarbeiten leichter zu beschaffen, bzw. stets auf Lager.

Insbesondere ist es vorteilhaft, den Reaktor derart auszuges-' talten, dass dieser durch zusätzliche Strömungskanäle zur Akkumulation von Erz-Magnetpartikel-Agglomeraten ergänzt bzw. erweitert werden kann. Ist es bspw. erforderlich, den Durchsatz eines Reaktors zu erhöhen, so kann einfach eine entsprechende Anzahl an Strömungskanälen, etwa durch anflanschen, fluidisch mit dem Reaktor verbunden werden. Hierdurch kann bspw. der Durchsatz der Vorrichtung erhöht oder der Ausfall eines Teils der Vorrichtung kompensiert werden. Eine derartige Erweiterung des Reaktors, kann ggf. bei vollem Betrieb der vorrichtung erfolgen. Dadurch wird die Flexibilität der Erzgewinnungsvorrichtung erhöht.

Besonders vorteilhaft ist es, dass die Anzahl und/oder die Ausgestaltung der Mehrzahl an Strömungskanälen derart bestimmt ist, dass folgende Gleichung erfüllt ist:

$$\dot{V}_{min\ soll} \leq \sum_{i=1}^{n} \dot{V}_i$$

wobei $V_{min\ soll}$ der minimal gewünschte Volumenstrom durch die Vorrichtung ist, und $V_i$ der Volumenstrom durch den i-ten Strömungskanal, wobei i ganzzahlig ist. Unter Volumenstrom wird das durch ein Referenzvolumen des Reaktors strömende Pulpenvolumen pro zeiteinheit verstanden. Hierbei ist es möglich, die Strömungskanäle zumindest teilweise unterschiedlich auszubilden, so dass der Teilvolumenstrom $V_i$ für die i Strömungskanäle zumindest für einzelne Strömungskanäle unterschiedlich ist. Abhängig von den jeweils vorgesehenen Teilvolumenströmen $V_i$ ergibt sich dann die Anzahl an Strömungskanälen für die Vorrichtung, da die Summe der Teilvolumenströme $V_i$ einen vorbestimmten minimal gewünschten Volumenstrom $V_{min\ soll}$ erreichen oder überschreiten soll.

Vorzugsweise beträgt der gewünschte minimale Volumenstrom zur Grobseparation bzw. Grobextraktion von Erzpartikel-Magnetpartikel-Agglomeraten mindestens 7000 Kubikmeter Pro Stunde ($m^3/h$), vorzugsweise 10000 $m^3/h$ bis 15000 $m^3/h$. In diesem Größenordnungsbereich beginnt eine Vorrichtung zur Grobgewinnung von Erzen aus einer erstmalig in einen Reaktor einströmende Pulpe wirtschaftlich zu arbeiten.

Für eine weitere Aufkonzentration von Erz mittels bereits mit Erz angereicherten Strömen wird vorzugsweise ein gewünschter minimaler Volumenstrom von mindestens 2 $m^3/h$, vorzugsweise 5 $m^3/h$ bis 10 $m^3/h$ eingestellt. Derartige mit Erz angereicherte Ströme werden im Rahmen dieser Anmeldung ebenfalls als Pulpe angesehen.

Vorzugsweise sind der Prozess der Grobgewinnung von Erz aus einer Pulpe und der Prozess der Aufkonzentration von Erz mittels bereits mit Erz angereicherten Strömen hintereinander vorgesehen.

In einer vorteilhaften Ausgestaltung der Erfindung ist die Mehrzahl an Strömungskanälen während des Betriebs im Wesentlichen vom gleichen Volumenstrom durchströmt, und die Anzahl der Strömungskanäle bestimmt sich nach:

$$\frac{\dot{V}_{min\ soll}}{\dot{V}_i} \leq n$$

wobei $V_{min\ soll}$ der minimal gewünschte Volumenstrom durch die Vorrichtung ist, und $V_i$ der Volumenstrom durch

den i-ten Strömungskanal, wobei i ganzzahlig ist. Dabei sind alle $V_i$ im Wesentlichen gleich. Durch eine derartige Ausbildung der Vorrichtung ergeben sich die oben genannten Vorteile. Insbesondere lässt sich so einfach die erforderliche Anzahl an erforderlichen Strömungskanälen zur Bereitstellung eines bestimmten Volumendurchsatzes ermitteln.

Ferner ist es vorteilhaft, dass die Mehrzahl an Strömungskanälen jeweils Mittel zur Erzeugung eines Erz-Magnetpartikel-Agglomerate in den wenigstens einen von dem jeweiligen Strömungskanal aufgewiesenen Akkumulationsbereich bewegenden Magnetfelds aufweist. Dies ist erforderlich, damit die Strömungskanäle zur Akkumulation von Erz-Magnetpartikel-Agglomeraten eingesetzt werden können. Erst dadurch findet eine tatsächliche Erhöhung des Durchsatzes mit wesentlicher Erzausbeute statt.

In einer besonders vorteilhaften Ausgestaltung der Erfindung weist wenigstens ein Strömungskanal der Mehrzahl an Strömungskanäle ein Verschließelement zum Öffnen und verschließen des wenigstens einen Strömungskanals auf, so dass im geschlossenen Zustand des dem wenigstens einen Strömungskanal zugeordneten Verschließelements, der wenigstens eine Strömungskanal nicht von der Pulpe durchströmbar ist. Dadurch ist es bspw. möglich, Strömungskanäle im Reaktor bei Bedarf, vorzugsweise mittels einer Steuereinrichtung, zuzuschalten bzw. abzuschalten. Insbesondere erlauben Ventile die Erweiterung der Vorrichtung durch Strömungskanäle im vollen Betrieb der Vorrichtung. Ein Bedarf kann bspw. bei einem Defekt eines bisher betriebenen Strömungskanals vorliegen oder im Falle einer Instandhaltungsmaßnahme für einen betriebenen Strömungskanal. Ggf. kann ein Bedarf auch in der Ausweitung der Erzgewinnung, d.h. einer Durchsatzerhöhung der Pulpe, liegen, die von den im Betrieb befindlichen Strömungskanälen nicht zu bewältigen ist. Die bspw. von einer Instandhaltungsmaßnahme betroffenen Strömungskanäle werden dann mit einer Verschließeinrichtung, etwa einem Ventil, verschlossen, während die Erzgewinnung durch die Verwendung weiterer bisher geschlossener Strömungskanäle und nun geöffneter Strömungskanäle fortgeführt wird.

Vorzugsweise ist wenigstens ein Strömungskanal durch ein Verschließelement derart verschließbar, dass das Verschließelement im geschlossenen Zustand den Pulpenstrom durch jeweils andere Strömungskanäle nicht behindert.

Vorzugsweise sind einzelne Strömungskanäle vom restlichen Reaktor abnehmbar. Dadurch kann ein schneller Austausch eines Strömungskanals oder der Mittel zur Erzeugung eines Magnetfelds ermöglich werden, ohne dass der Durchsatz der Vorrichtung zu stark eingeschränkt wird.

In einer weiteren vorteilhaften Ausgestaltung der Erfindung umfasst die Vorrichtung eine Einrichtung zur Herstellung von bei Kontakt mit Erzpartikeln Erz-Magnetpartikel-Agglomerate bildende Magnetpartikeln. Dadurch kann flexibel auf den Verbrauch von Magnetpartikeln reagiert werden. Eine entsprechende Planung für die Herstellung der Magnetpartikel kann in Abhängigkeit von der Auslastung, insbesondere des geplanten Pulpendurchsatzes des Reaktors erfolgen.

weitere vorteile der Erfindung ergeben sich aus einem Ausführungsbeispiel, welches anhand der nachfolgenden schematischen Figuren genauer erläutert wird. Es zeigen:

FIG 1      eine schematische Darstellung einer Vorrichtung zur Gewinnung von nicht nichtmagnetischen Erzen aus einer nichtmagnetische Erzpartikel enthaltenden Pulpe,

FIG 2      eine schematische Darstellung eines Separationsbereichs eines Reaktors,

FIG 3      ein Flussdiagramm zur Darstellung eines beispielhaften Ablaufs des erfindungsgemäßen Verfahrens.

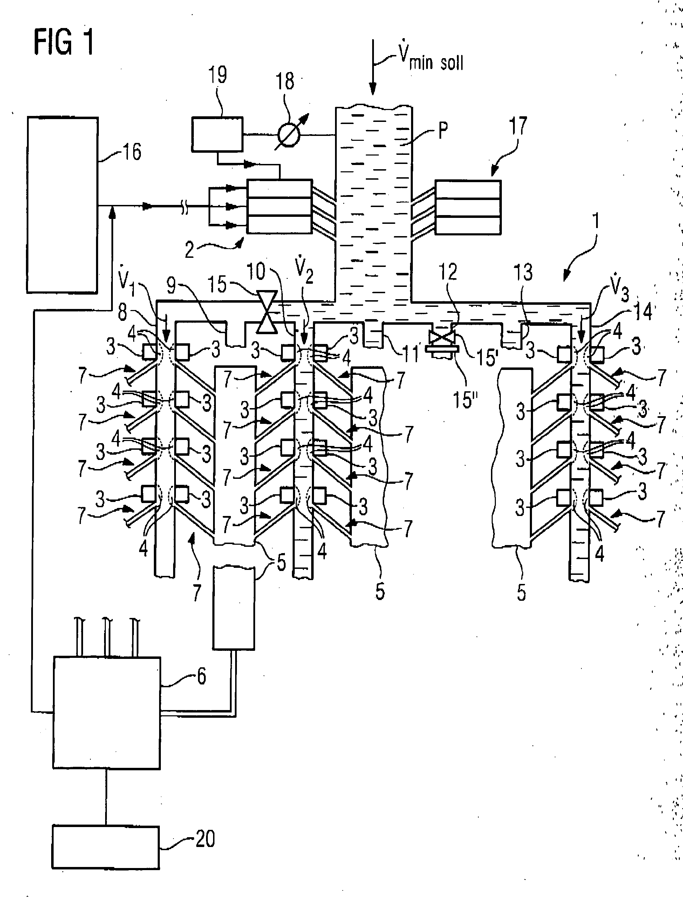

Die in FIG 1 schematisch dargestellte Vorrichtung zur Erzgewinnung umfasst einen Reaktor 1, welcher mit einer Pulpe P durchströmt wird. Die Pulpe P weist einen Feststoffanteil von 40 bis 60 Volumenprozent (Vol%) und ist daher in hohem Maße abrasiv. Der Feststoff in der Pulpe setzt sich im Wesentlichen zusammen aus Gangart, d.h. Gestein, und dem Erz. Die Pulpe P wird dem Reaktor 1 mit einer Fließgeschwindigkeit zugeführt, so dass ein gewünschter minimaler Pulpenvolumenstrom $V_{\text{min soll}}$ durch den Reaktor 1 erreicht wird. Der gewünschte minimale Pulpenvolumenstrom $V_{\text{min soll}}$ beträgt im vorliegenden Ausführungsbeispiel 135 m$^3$ pro Minute.

Die in den Reaktor 1 eintretende Pulpe P weist bereits Erz-Magnetpartikel-Agglomerate auf, da die Zuführung von Magnetpartikeln und Hydrophobisierungmitteln bereits in einer Erzmühle zum Mahlen von Erz erfolgt ist. Dadurch wird eine hohe Mischungsenergie in die Pulpe P eingetragen, was zu einer verbesserten Bildung von Erz-Magnetpartikel-Agglomeraten beiträgt. Alternativ oder zusätzlich kann eine Zugabe von Magnetpartikeln und Hydrophobisierungsmitteln erst in der Vorrichtung erfolgen. Im vorliegenden Ausführungsbeispiel bilden sulfidische Erze, insbesondere Kupfersulfid oder Molybdänsulfid, das nichtmagnetische, zu gewinnende Erz. Das Verfahren bzw. die Vorrichtung kann für eine Vielzahl an nichtmagnetischen Erzen, insbesondere für sulfidische Erze sowie - bei Einsatz geeigneter Hydrophobisierungchemie - auch für oxidische und andere Erze, verwendet werden.

Für die in den Reaktor 1 einströmende Pulpe P wird mittels einer Messeinrichtung 18 eine Zustandsgröße für die Pulpe P, insbesondere eine durch die Erzpartikel beeinflusste Zustandsgröße der Pulpe P, erfasst. Im vorliegenden Fall wird als Zustandsgröße ein mittlerer Anteil für noch nicht an Magnetpartikel gebundene Erzpartikel in der Pulpe P verwendet. Jedoch kann der Fachmann auch jede andere Zustandsgröße oder Kombination von Zustandsgrößen für die Pulpe P mit Einfluss auf die Erzgewinnung wählen.

Anhand dieser erfassten Zustandsgröße steuert eine Steuereinrichtung 19 die zusätzliche Zugabe von Magnetpartikeln in die bereits mit Magnetpartikeln beaufschlagte Pulpe P. Liegen verschiedene Erze in der Pulpe vor, so können auch verschiedene Magnetpartikel, welche sich bspw. in der Ausbildung ihrer selektiven, für ein bestimmtes Erz konditionierten Oberfläche unterscheiden, der Pulpe P mittels einer Zuführeinrichtung 2 zugeführt werden. Ferner können bei Bedarf, ggf. auch von der Steuereinrichtung 19 gesteuert, weitere Zusatzstoffe mittels derselben oder einer weiteren Zuführungseinrichtung 17 in die Pulpe P eingebracht werden.

Anschließend wird der Pulpenstrom im vorliegenden Ausführungsbeispiel in eine Mehrzahl an Strömungskanäle 10, 11, 12, 13 und 14 geleitet. Die Anzahl der Strömungskanäle 10, 11, 12, 13 und 14 ist derart gewählt, dass mit diesen in Summe der gewünschte minimale Pulpenvolumenstrom $V_{min\ soll}$ erreicht wird. Ferner sind zwei weitere Strömungskanäle 8 und 9 vorgesehen, welche bei Bedarf durch Öffnen eines Ventils 15 zur Erzgewinnung zugeschaltet werden können.

Ferner ist wenigstens ein Strömungskanal 10, 11, 12, 13 und 14 mit einem Ventil 15' derart verschließbar, dass die Strömung der Pulpe P durch die weiteren Strömungskanäle 10, 11, 12, 13 und 14 nicht behindert wird. Ein derartiges Ventil 15' weist im Ausführungsbeispiel der Strömungskanal 12 auf. Durch dieses Ventil 15' kann der Strömungskanal 12 gesperrt bzw. verschlossen werden, ohne dass die übrigen Strömungskanäle in ihrer Funktion beeinträchtigt werden. Zu einem beliebigen . Zeitpunkt kann das Ventil 15' wieder geöffnet werden, so dass der Strömungskanal 12 wieder mit Pulpe P durchflossen wird.

Vorzugsweise weisen alle Strömungskanäle 8, 9, 10, 11, 12, 13 und 14 ein derartiges Ventil 15' auf. Ferner weist der Strömungskanal 12 einem dem Ventil 15' in Strömungsrichtung nachgelagerte lösbare Befestigungseinrichtung 15" auf, mittels welcher der Strömungskanal am restlichen Reaktor 1 abnehmbar befestigbar ist. Vorzugsweise weisen alle Strömungskanäle eine derartige Befestigungseinrichtung 15" auf.

Eine derartige Befestigungseinrichtung 15" ist besonders vorteilhaft, da bspw. Reparaturmaßnahmen nicht vor Ort durchgeführt werden müssen, sondern der betroffene Strömungskanal, etwa der Strömungskanal 12, in eine Werkstatt befördert werden kann, während die restliche Vorrichtung weiterbetrieben wird. Insbesondere kann ein derartiger Strömungskanal besonders einfach - bspw. aufgrund einer länger andauernden Reparatur für einen defekten Strömungskanal - durch einen anderen Strömungskanal während des Betriebs der Vorrichtung ersetzt werden, indem dieser an der Stelle des ausgebauten Strömungskanals in den Reaktor 1 eingebaut wird. Nach der Installation wird das diesem Strömungskanal zugeordnete Ventil 15' geöffnet und der dann eingebaute Strömungskanal trägt zur Erzgewinnung bei. Dadurch werden Durchsatzeinbußen vermieden. Auch treten keine Stillstandszeiten der Vorrichtung auf.

Ein besonders einfacher Ersatz eines zur Erzgewinnung geeigneten Strömungskanals 8, 9, 10, 11, 12, 13 und 14 ist dann möglich, wenn Mittel 3 zur Erzeugung eines Magnetfelds relativ zum Strömungskanal 8, 9, 10, 11, 12, 13 und 14 fix angeordnet sind und damit zusammen mit dem Strömungskanal montierbar bzw. demontierbar sind. Dadurch erhält man ein funktionsfähiges Modul, welches lediglich am Reaktor 1 und an eine Abführeinrichtung 7 angeschlossen werden muss.

Ferner sind im vorliegenden Ausführungsbeispiel alle Strömungskanäle 8, 9, 10, 11, 12, 13 und 14 baulich im Wesentlichen identisch. D.h. sind bspw. die Strömungskanäle 10, 11, 12, 13 und 14 in Betrieb, so weisen diese in der Regel auch die gleichen Volumenströme auf.

An den Strömungskanälen 8, 9, 10, 11, 12, 13 und 14 sind jeweils in Strömungsrichtung nacheinander eine Mehrzahl an Mitteln 3 zur Erzeugung von Magnetfeldern vorgesehen. Die durch die Mittel 3 erzeugten Magnetfelder bewegen die in der Pulpe P enthaltenen Erz-Magnetpartikel-Agglomerate in die jeweiligen Akkumulationsbereiche 4 in den Strömungskanälen 10, 11, 12, 13 und 14, sofern ein Strömungskanal 8, 9, 10, 11, 12, 13 und 14 mit Pulpe P durchströmt wird.

Je nach Betriebsweise der Vorrichtung akkumulieren sich die Erz-Magnetpartikel-Agglomerate innerhalb des Akkumulationsbereichs 4 des Reaktors 1, und werden dann diskontinierlich, vorzugsweise geführt von einem Magnetfeld, erzeugt von separaten dafür vorgesehenen Mitteln - in FIG 1 nicht dargestellt-, in einen Sammelbereich 5 geführt.

Vorzugsweise werden die Erz-Magnetpartikel-Agglomerate in eine Mehrzahl an Sammelbereiche 5 abgeführt. Insbesondere ist im Ausführungsbeispiel vorgesehen, dass benachbarte Strömungskanäle, wie etwa Strömungskanal 12,13 und 14 ihre Akkumulationsbereiche 4 in einen gemeinsamen Sammelbereich 5 entleeren.

Im Sammelbereich 5 und/oder der separaten Trennungseinrichtung 6 werden die Erz-Magnetpartikel-Agglomerate in Erzpartikel und Magnetpartikel getrennt. Hierzu wird unter anderem Ultraschall hoher Leistung verwendet, um die Oberflächenbindung der Erzpartikel und der Magnetpartikel aufzubrechen. Der Ultraschall wird mittels eines Ultraschallsenders mit entsprechend hoher Leistung in den Sammelbereich 5 oder in die Trenneinrichtung 6 eingestrahlt.

Durch die im Ausführungsbeispiel in der Trenneinrichtung 6 vorgenommen Trennung der Erz-Magnetpartikel-Agglomerate in Erzpartikel und Magnetpartikel kann erreicht werden, dass einerseits die Magnetpartikel wieder der Zuführeinrichtung 2 zugeführt werden können. Andererseits können die erhaltenen Erzpartikel in einer Weiterverarbeitungseinrichtung 20 im Wesentlichen herkömmlich weiterverarbeitet werden.

Ferner umfasst die Vorrichtung eine Einrichtung 16 zur Herstellung von Magnetpartikeln, wobei die Magnetpartikel bei Kontakt mit Erzpartikeln Erz-Magnetpartikel-Agglomerate bilden. Obwohl mittels der Trenneinrichtung 6 eine Trennung von Erzpartikeln und Magnetpartikeln erreicht werden kann, ist es nicht zweckmäßig alle Magnetpartikel erneut der Pulpe P, bspw. mit der Zuführeinrichtung 2, zuzuführen. Insbesondere aufgrund des Trennungsprozesses kommt es zu degenerativen Erscheinungen an der Oberfläche der Magnetpartikel, die dazu führen, dass die Magnetpartikel Erzpartikel nur schwerer oder keine Erzpartikel mehr binden. Es besteht also in der Regel das Erfordernis, stets neu konditionierte Magnetpartikel vorzuhalten, um verbrauchte Magnetpartikel zu ersetzen.

Hierzu ist eine entsprechende Einrichtung 16 zur Herstellung von Magnetpartikeln besonders vorteilhaft. Insbesondere ist es vorteilhaft, wenn die Zuführeinrichtung direkt mit der Einrichtung 16 zur Herstellung von Magnetpartikeln verbunden ist. Insbesondere können in der Einrichtung 16 zur Herstellung von Magnetpartikeln auch verbrauchte Magnetpartikel wieder erneuert bzw. die Oberfläche der Magnetpartikel neu konditioniert werden, so dass diese wieder zur Bildung von Erz-Magnetpartikeln-Agglomeraten eingesetzt werden können. Dadurch können die Materialkosten für die Magnetpartikel weiter reduziert werden.

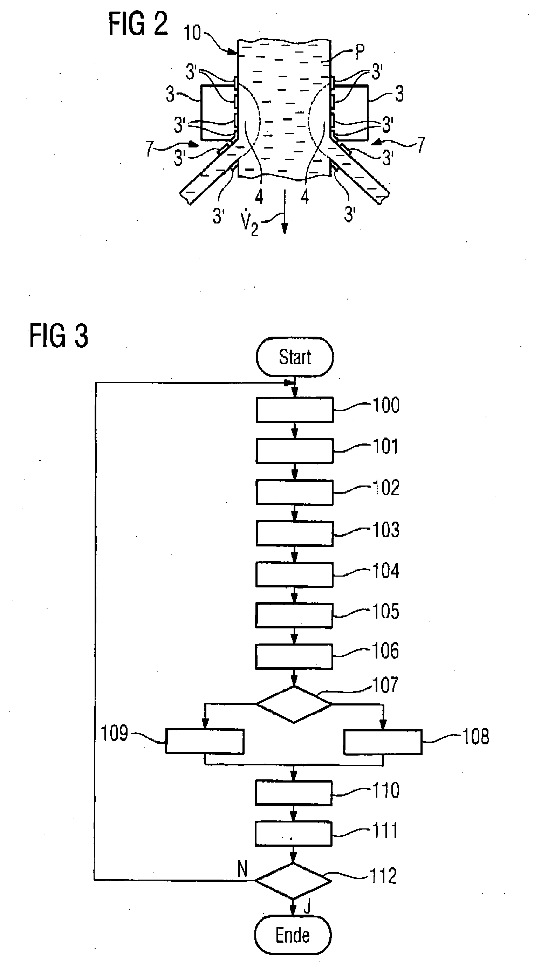

FIG 2 zeigt einen Ausschnitt eines Strömungskanals, bspw. des Strömungskanals 10. Nahe oder am Strömungskanal sind Mittel 3 zur Erzeugung eines Magnetfelds angeordnet, wobei die Mittel 3 derart ausgebildet sind, dass das Magnetfeld Erz-Magnetpartikel-Agglomerate in einen Akkumulationsbereich 4 des Strömungskanals 10 bewegt. Neben den Mitteln 3 zur Erzeugung eines Magnetfelds zur Bewegung von Erz-Magnetpartikel-Agglomeraten in einen Akkumulationsbereich 4, sind Mittel 3' zur Erzeugung eines Magnetfelds zur magnetischen Abführung der Erz-Magnetpartikel-Agglomerate aus dem Akkumulationsbereich 4 vorhanden. Die Abführeinrichtung 7, umfassend die Mittel 3' und eine nicht näher bezeichnete Fluidführung, ist fluidisch mit dem Reaktor 1, insbesondere mit dem Strömungskanal, sowie mit einem in FIG 2 nicht dargestellten Sammelbereich verbunden.

Die Mittel 3' der Abführeinrichtung sind derart ausgebildet, " dass diese eine Kraft auf die im Akkumulationsbereich 4 vorliegenden Erz-Magnetpartikel-Agglomerate ausüben, welche diese gezielt in die sich vom Reaktor 1 bzw. dem jeweiligen Strömungskanal 8, 9, 10, 11, 12, 13 und 14 zum Sammelbereich 5 erstreckende Fluidführung lenkt. Die Abführung in die Fluidführung kann ggf. zusätzlich durch einen Unterdruck in der Fluidführung unterstützt werden. Gegebenenfalls kann die Fluidführung Mittel zum Verschließen der Fluidführung aufweisen. Die Fluidführung wird mit Hilfe der Mittel zum Verschließen der Fluidführung nur dann geöffnet, wenn eine Mindestmenge an Erz-Magnetpartikel-Agglomeraten im Akkumulationsbereich 4 vorliegt. Ferner erfolgt die Öffnung der Fluidführung in Abstimmung mit den Mitteln 3', welche die Kraft auf die Erz-Magnetpartikel-Agglomerate ausüben. Dadurch wird erreicht, dass die Fluidführung nicht permanent mit Pulpe durchströmt wird und die Abführung von Erz-Magnetpartikel-Agglomeraten besonders schnell aus dem Akkumulationsbereich 4 erfolgt. Alternativ kann auch eine kontinuierliche Abführung der Erz-Magnetpartikel-Agglomerate erfolgen, indem ständig Erz-Magnetpartikel-Agglomerate aus der Pulpe P in den Sammelbereich bzw. in die Fluidführung gelenkt bzw. geführt werden.

FIG 3 zeigt ein Flussdiagramm zur Darstellung des schematischen Ablaufs eines beispielhaften Verfahrens zur Gewinnung von nichtmagnetischen Erzen.

Das Verfahren geht davon aus, dass in den in FIG 1 gezeigten Reaktor Pulpe zuführbar ist und Pulpe zur Gewinnung von nichtmagnetischen Erzen bereitgestellt ist. In einem ersten Verfahrensschritt 100 wird der Reaktor mit Pulpe durchströmt.

Das im Verfahrensschritt 100 eingestellte Durchströmen der Pulpe im Reaktor wird vorzugsweise nahezu zeitgleich mit dem Verfahrensschritt 101 ausgeführt, in welchem die Strömung der Pulpe durch den Reaktor turbulent eingestellt wird. Dies hat den Vorteil, dass eine hohe Durchmischung der Pulpe erfolgt, und ferner magnetfeldfreie Räume mit geringer räumlicher Ausdehnung, ggf. erzeugt durch die Mittel zur Erzeugung eines Magnetfelds, welches die in der Pulpe zu diesem Zeitpunkt vorliegenden Erz-Magnetpartikel-Agglomerate in einen Akkumulationsbereich des Reaktors bewegt, geringere bzw. keine Bedeutung für die Erzgewinnung haben. Magnetfeldfreie Räume können erforderlich sein, um den Kraftverlauf, welcher sich darstellt als F-BgradB, wobei F die Kraft ist und B die magnetische Flussdichte, im Reaktor zu verbessern.

Die turbulente Durchströmung des Reaktors kann bspw. durch Einstellung einer entsprechend hohen Fließgeschwindigkeit der Pulpe erzeugt werden. Auch bauliche Maßnahmen am Reaktor sind geeignet, um Wirbel in der Pulpe zu verursachen.

In einem Verfahrensschritt 102 erfolgt eine Messung wenigstens einer Zustandsgröße der Pulpe, welche Einfluss auf die Erzgewinnung, insbesondere die Ausbeute der Erzgewinnung, nimmt. Dies kann bspw. eine mittlere Erzpartikelgröße sein. Zusätzlich wird vorzugsweise noch eine mittlere Konzentration für noch nicht in Form von Erz-Magnetpartikel-Agglomeraten in der Pulpe vorliegende Erzpartikel ermittelt. Es können auch mehrere Messungen an unterschiedlichen Orten des Reaktors, vorzugsweise in Strömungsrichtung der Pulpe, durchgeführt werden, und darauf basierend eine Steuerung/Regelung der Zuführung von Magnetpartikeln und/oder Zusatzstoffen erfolgen.

Im vorliegenden Fall wurde die Pulpe bereits in einer Erzmühle, während des Mahlens des Erzes, mit Magnetpartikeln und Hydrophobisierungsmitteln beaufschlagt. Die anhand der ermittelten Zustandsgröße gesteuerte zugabe von Magnetpartikeln im Verfahrensschritt 103 und von Hydrophobisierungsmitteln im Verfahrensschritt 104 in die Pulpe ist daher im vorliegenden Fall nur ergänzend. Jedoch kann auch die gesamte Zuführung der Magnetpartikel und zusatzstoffe innerhalb des Reaktors oder kurz vor dem Reaktor in einer separaten Mischeinrichtung stattfinden.

Die derart behandelte Pulpe wird dann in einem Verfahrensschritt 105 in eine Mehrzahl an Strömungskanäle eingeleitet. Dies erlaubt einen hohen, für den Bergbaubetrieb geeigneten Durchsatz mittels des erfindungsgemäßen Verfahrens.

In einem nächsten Verfahrensschritt 106 werden die in der Pulpe vorliegenden Erz-Magnetpartikel-Agglomerate in jedem mit Pulpe durchströmten Strömungskanal mittels einer Mehrzahl von in Strömungsrichtung aufeinanderfolgender Magnetfelder in die vorhandenen Akkumulationsbereiche des jeweiligen Strömungskanals bewegt.

Aus diesen Akkumulationsbereichen werden die Erz-Magnetpartikel-Agglomerationen diskontinuierlich in einem Verfahrensschritt 108 oder kontinuierlich in einem Verfahrensschritt 109 abgeführt. Ob eine diskontinuierliche oder kontinuierliche Abführung aus einem bestimmten Akkumulationsbereich erfolgen soll, wird in einem Verfahrensschritt 107 entschieden. Aus dem Akkumulationsbereich werden die Erz-Magnetpartikel-Agglomerate in einen Sammelbereich geführt.

Im Sammelbereich oder in einer separat dafür vorgesehenen Trenneinrichtung werden die Erz-Magnetpartikel-Agglomerate mittels chemischer, mechanischer, akustischer und/oder thermischer Verfahren in Erzpartikel und Magnetpartikel in einem Verfahrensschritt 110 getrennt. Besonders vorteilhaft zur Aufspaltung der Erz-Magnetpartikel-Agglomerate ist die Verwendung von Ultraschall.

Sind die Erz-Magnetpartikel-Agglomerate in Erzpartikel und Magnetpartikel voneinander getrennt, so können die Magnetpartikel zumindest teilweise in einem verfahrensschritt 111 wiederverwertet werden. Die Wiederverwertung der abgetrennten Magnetpartikel kann im Rahmen der Neuherstellung von Magnetpartikeln erfolgen, bspw. als Verwendung als Grundmaterial. Dabei wird bspw. für die getrennten und für die Agglomeration inaktiven Magnetpartikel die Oberfläche neu konditioniert. Darüber hinaus können für die Agglomeration noch aktive, aus der Trennung von Erz-Magnetpartikel-Agglomeraten stammende Magnetpartikel wieder in die Pulpe eingebracht werden.

Das Verfahren kann bei Bedarf beendet werden. Dies wird in einem Verfahrensschritt 112 abgefragt. Da es sich jedoch um ein kontinuierliches Verfahren zur Erzgewinnung handelt, wird das Verfahren vorzugsweise permanent ausgeführt

## Patentansprüche

1. Verfahren zur kontinuierlichen Gewinnung von nichtmagnetischen Erzen aus einer nichtmagnetische Erzpartikel aufweisenden Pulpe (P) mit einem Feststoffanteil von wenigstens 40 Volumenprozent,

   - wobei die Pulpe (P) einen Reaktor (1) in Strömungsrichtung kontinuierlich durchströmt (100),
   - wobei der Pulpe (P) magnetische oder magnetisierbare Magnetpartikel zugeführt (103) werden, welche mit den nichtmagnetischen Erzpartikeln Erz-Magnetpartikel-Agglomerate bilden,
   - wobei die Erz-Magnetpartikel-Agglomerate mittels eines Magnetfelds in einen Akkumulationsbereich (4) des Reaktors (1) bewegt (106) werden, und
   - wobei die Erz-Magnetpartikel-Agglomerate aus dem Akkumulationsbereich (4) des Reaktors (1) abgeführt (108, 109) werden.

2. Verfahren nach Anspruch 1,
   **dadurch gekennzeichnet, dass** die Erz-Magnetpartikel-Agglomerate mittels einer Mehrzahl an in Strömungsrichtung nacheinander folgenden Magnetfeldern in voneinander getrennte Akkumulationsbereiche (4) des Reaktors (1) bewegt (106) werden.

3. Verfahren nach einem der vorhergehenden Ansprüche,
   **dadurch gekennzeichnet, dass** die Magnetpartikel und/oder die Erzpartikel hydrophobisiert (104) werden.

4. Verfahren nach einem der vorhergehenden Ansprüche,
   **dadurch gekennzeichnet, dass** die Pulpe (P) den Reaktor (1) turbulent durchströmt (101).

5. Verfahren nach einem der Ansprüche 1 bis 4,
   **dadurch gekennzeichnet, dass** die Erz-Magnetpartikel-Agglomerate kontinuierlich mittels eines Magnetfeldes und/oder strömungstechnischer Maßnahmen in einen Sammelbereich (5) abgeführt (109) werden.

3. Verfahren nach einem der Ansprüche 1 bis 4,
   **dadurch gekennzeichnet, dass** die Erz-Magnetpartikel-Agglomerate mittels eines Magnetfeldes und/oder strömungstechnischer Maßnahmen diskontinuierlich, insbesondere bei Überschreiten einer Mindestmenge der akkumulierten Erz-Magnetpartikel-Agglomerate im Akkumulationsbereich (4), in einen Sammelbereich (5) abgeführt (108) werden.

7. Verfahren nach einem der vorhergehenden Ansprüche,
   **dadurch gekennzeichnet, dass** die Erz-Magnetpartikel-Agglomerate durch chemische, mechanische, akustische und/oder thermische verfahren in Erzpartikel und Magnetpartikel getrennt (110) werden.

**8.** Verfahren nach Anspruch 7,
**dadurch gekennzeichnet, dass** die Trennung von Magnetpartikeln und Erzpartikeln mittels Ultraschall erfolgt.

**9.** Verfahren nach Anspruch 7 oder 8,
**dadurch gekennzeichnet, dass** die von Erz-Magnetpartikel-Agglomeraten abgetrennten Magnetpartikel der Pulpe (P) erneut zugeführt (111) werden.

**10.** Verfahren nach einem der vorhergehenden Ansprüche,
**dadurch gekennzeichnet, dass** die Pulpe (P) eine Mehrzahl an voneinander getrennten, im strömungstechnischen Sinne parallel geschalteten Strömungskanälen (8, 9, 10, 11, 12, 13, 14) durchströmt (100), wobei die Strömungskanäle (8, 9, 10, 11, 12, 13, 14) jeweils mit wenigstens einem Magnetfeld beaufschlagt werden, welches Erz-Magnetpartikel-Agglomerate im jeweiligen Strömungskanal (8, 9, 10, 11, 12, 13, 14) in wenigstens einen Akkumulationsbereich (4) bewegt (106).

**11.** verfahren nach einem der vorhergehenden Ansprüche,
**dadurch gekennzeichnet, dass** eine zustandsgröße für die Pulpe (P) erfasst (102) wird und die Zuführung von Magnetpartikeln und/oder ggf. weiteren Zusatzstoffen, insbesondere Mittel zur Hydrophobisierung von Magnetpartikeln und/oder Erzpartikeln, auf Grundlage der erfassten Zustandsgröße gesteuert und/oder geregelt wird.

**12.** Verfahren nach einem der vorhergehenden Ansprüche,
**dadurch gekennzeichnet, dass** der Pulpe (P) Magnetpartikel vor Eintritt der Pulpe (P) in den Reaktor (1), insbesondere bei einem Mahlvorgang zum Mahlen von Erz, zugeführt (103) werden.

**13.** Vorrichtung zur kontinuierlichen Gewinnung von nichtmagnetischen Erzen aus einer nichtmagnetische Erzpartikel aufweisenden Pulpe (P) mit einem Feststoffanteil von wenigstens 40 Volumenprozent, mit einem zur Aufnahme von Pulpe (P) dienenden Reaktor (1), wobei der Pulpe mit Erzpartikeln Erz-Magnetpartikel-Agglomerate bildende Magnetpartikel zugeführt sind, mit Mitteln (3) zur Erzeugung eines Magnetfeldes, welches derart ausgestaltet ist, dass Erz-Magnetpartikel-Agglomerate in wenigstens einen Akkumulationsbereich des Reaktors bewegt werden, und mit einer Einrichtung (3', 7) zur Abführung der Erz-Magnetpartikel-Agglomerate aus dem wenigstens einen Akkumulationsbereich (4) in wenigstens einen Sammelbereich (5).

**14.** Vorrichtung nach Anspruch 13,
**dadurch gekennzeichnet, dass** der Reaktor (1) derart ausgebildet ist, dass dieser von einem festlegbaren Pulpen-Volumenstrom, vorzugsweise mindestens 7000 Kubikmeter pro Stunde, insbesondere 10000 Kubikmeter pro Stunde bis 15000 Kubikmeter pro Stunde, durchströmbar ist.

**15.** Vorrichtung nach Anspruch 13 oder 14,
**dadurch gekennzeichnet, dass** der Reaktor (1) mit dem wenigstens einen Sammelbereich (5) fluidisch verbunden ist.

**16.** Vorrichtung nach einem der vorhergehenden Ansprüche,
**gekennzeichnet durch** wenigstens eine Trennungseinrichtung (6) mit Ultraschallsendern zur Abgabe von Ultraschall, deren abgebbare Leistung derart einstellbar ist, dass Erz-Magnetpartikel-Agglomerate in Magnetpartikel und Erzpartikel trennbar sind.

**17.** Vorrichtung nach einem der vorgehenden Ansprüche,
**dadurch gekennzeichnet, dass** die Abführeinrichtung (3', 7) Mittel (3') zur Erzeugung eines Magnetfeldes aufweist, welches derart ausgebildet ist, dass die Erz-Magnetpartikel-Agglomerate magnetisch geführt aus dem wenigstens einen Akkumulationsbereich (4) abgeführt werden.

**18.** Vorrichtung nach einem der vorhergehenden Ansprüche,
**dadurch gekennzeichnet, dass** der Reaktor (1) eine Mehrzahl an voneinander getrennten, im strömungstechnischen Sinne parallel geschalteten Strömungskanälen (8, 9, 10, 11, 12, 13, 14) umfasst.

**19.** Vorrichtung nach Anspruch 18,
**dadurch gekennzeichnet, dass** die Anzahl und/oder die Ausgestaltung der Mehrzahl an Strömungskanälen (8, 9, 10, 11, 12, 13, 14) derart bestimmt ist, dass folgende Gleichung erfüllt ist:

$$\dot{V}_{min\,soll} \leq \sum_{i=1}^{n} \dot{V}_i$$

wobei $V_{min\,soll}$ der gewünschte minimale Volumenstrom durch die Vorrichtung ist, und $V_i$ der Volumenstrom durch den i-ten Strömungskanal, wobei i ganzzahlig ist.

**20.** Vorrichtung nach Anspruch 18,
**dadurch gekennzeichnet, dass** die Mehrzahl an Strömungskanälen (8, 9, 10, 11, 12, 13, 14) während des Betriebs im Wesentlichen vom gleichen Volumenstrom ($V_i$) durchströmt ist, und die Anzahl (n) der Strömungskanäle (8, 9, 10, 11, 12, 13, 14) bestimmt ist nach:

$$\frac{\dot{V}_{min\,soll}}{\dot{V}_i} \leq n$$

wobei $V_{min\,soll}$ der gewünschte minimale Volumenstrom durch die Vorrichtung ist, und $\dot{V}_i$ der gleiche Volumenstrom durch alle i durchströmten Strömungskanäle, wobei n, i ganzzahlig sind.

**21.** Vorrichtung nach einem der Ansprüche 18 bis 20,
**dadurch gekennzeichnet, dass** die Mehrzahl an Strömungskanälen (8, 9, 10, 11, 12, 13, 14) jeweils Mittel (3) zur Erzeugung eines Erz-Magnetpartikel-Agglomerate in den wenigstens einen von dem jeweiligen Strömungskanal (8, 9, 10, 11, 12, 13, 14) aufgewiesenen Akkumulationsbereich (4) bewegenden Magnetfelds aufweist.

**22.** Vorrichtung nach einem der Ansprüche 18 bis 21,
**dadurch gekennzeichnet, dass** wenigstens ein Strömungskanal (8, 9, 10, 11, 12, 13, 14) der Mehrzahl an Strömungskanälen (8, 9, 10, 11, 12, 13, 14) ein Verschließelement (15, 15') zum Öffnen und Verschließen des wenigstens einen Strömungskanals (8, 9, 10, 11, 12, 13, 14) aufweist, so dass im geschlossenen zustand des dem wenigstens einen Strömungskanal (8, 9, 10, 11, 12, 13, 14) zugeordneten verschließelements (15, 15') der wenigstens eine Strömungskanal (8, 9, 10, 11, 12, 13, 14) nicht von der Pulpe (P) durchströmbar ist.

**23.** Vorrichtung nach einem der vorhergehenden Ansprüche,
**gekennzeichnet durch** eine Einrichtung (16) zur Herstellung von bei Kontakt mit Erzpartikeln Erz-Magnetpartikel-Agglomerate bildende Magnetpartikeln.

# FIG 1

## FIG 2

## FIG 3

**Europäisches Patentamt**

## EUROPÄISCHER RECHERCHENBERICHT

Nummer der Anmeldung

EP 08 00 2788

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 3 926 789 A (SHUBERT ROLAND H) 16. Dezember 1975 (1975-12-16) * Ansprüche 1,5,7 * ----- | 1-23 | INV. B03C1/015 B03C1/28 |
| X | US 4 657 666 A (SNOOK HARVEY [AU] ET AL) 14. April 1987 (1987-04-14) * Ansprüche 1-7 * ----- | 1-23 | |
| X | US 4 643 822 A (PARSONAGE PHILIP G [GB]) 17. Februar 1987 (1987-02-17) * Spalte 11, Zeile 65 - Spalte 12, Zeile 12 * ----- | 1-23 | |
| X | WO 02/066168 A (AUSMELT LTD [AU]; HUGHES TERRENCE CHARLES [AU]) 29. August 2002 (2002-08-29) * Seite 10, Zeile 31 - Seite 11, Zeile 12 * ----- | 1-23 | |
| X | US 5 161 694 A (YOON ROE-HOAN [US] ET AL) 10. November 1992 (1992-11-10) * Ansprüche 21,22 * ----- | 1-23 | RECHERCHIERTE SACHGEBIETE (IPC) B03C |
| A | US 6 006 920 A (BILIMORIA BOMI M [US] ET AL) 28. Dezember 1999 (1999-12-28) * Anspruch 1 * ----- | 1-23 | |

Der vorliegende Recherchenbericht wurde für alle Patentansprüche erstellt

| Recherchenort | Abschlußdatum der Recherche | Prüfer |
|---|---|---|
| Den Haag | 16. Juli 2008 | Demol, Stefan |

EPO FORM 1503 03.82 (P04C03)

**EP 2 090 367 A1**

## ANHANG ZUM EUROPÄISCHEN RECHERCHENBERICHT
## ÜBER DIE EUROPÄISCHE PATENTANMELDUNG NR.

EP 08 00 2788

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-07-2008

| Im Recherchenbericht angeführtes Patentdokument | | Datum der Veröffentlichung | Mitglied(er) der Patentfamilie | | | Datum der Veröffentlichung |
|---|---|---|---|---|---|---|
| US 3926789 | A | 16-12-1975 | AU | 7077174 | A | 08-01-1976 |
| | | | CA | 1007596 | A1 | 29-03-1977 |
| | | | ZA | 7404343 | A | 30-07-1975 |
| US 4657666 | A | 14-04-1987 | WO | 8301397 | A1 | 28-04-1983 |
| | | | DE | 3275506 | D1 | 09-04-1987 |
| | | | EP | 0091923 | A1 | 26-10-1983 |
| | | | JP | 58501759 | T | 20-10-1983 |
| US 4643822 | A | 17-02-1987 | KEINE | | | |
| WO 02066168 | A | 29-08-2002 | KEINE | | | |
| US 5161694 | A | 10-11-1992 | KEINE | | | |
| US 6006920 | A | 28-12-1999 | AU | 7373198 | A | 27-11-1998 |
| | | | BR | 9815906 | A | 16-01-2001 |
| | | | WO | 9850161 | A1 | 12-11-1998 |

EPO FORM P0461

Für nähere Einzelheiten zu diesem Anhang : siehe Amtsblatt des Europäischen Patentamts, Nr.12/82